# EUROPEAN PATENT APPLICATION

(11) **EP 3 575 193 A1**
(43) Date of publication of application: **04.12.2019**
(21) Application number: 19172338.6
(22) Date of filing: 02.05.2019
(51) Int. Cl.: B62H 3/06, B62J 19/00

(54) **BICYCLE RACK**

(30) Priority: 30.05.2018 GB 201808799
(71) Applicant: Crown Cycles Ltd., St. Margarets, Middlesex TW1 3EJ (GB)
(72) Inventor: Hill, Mark, St. Margarets, Middlesex TW1 3EJ (GB); Woodley, Lex, Twickenham, Middlesex TW1 2LY (GB)
(74) Representative: Johnstone, Douglas Ian

(57) **Abstract**

A bicycle rack comprises at least two interengageable substantially flat base frames (2). Each base frame (2) includes first and second substantially parallel longitudinal members (4, 5) and a spacing member (6), the members (4, 5, 6) lying on a frame plane (9) and delimiting a storage region (10), wherein the members of each base frame (2) are permanently interconnected. The bicycle rack also has a plurality of like wheel support members (24, 24'), each defining a support member plane (25), and having first and second engagement means (26, 27) which are respectively engagable with support means (22, 23) of the first and second longitudinal members (4, 5) such that its support member plane (25) is substantially perpendicular to the base frame plane (9). The storage region (10) of each base frame (2) is dimensioned to receive plural wheel support members (24, 24') with the support member planes (25) substantially parallel to the base frame plane (9) when the bicycle rack (1) is disassembled.

## Description

The present invention relates to a bicycle rack or docking station.

A temporary bicycle rack for storing bicycles may be used when, say, a group of people such as a family go camping or caravanning and bring bicycles with them. Such a temporary bicycle rack may also be used in a multisport event (e.g. a triathlon) where competitors transition from one sport to another sport wherein one of the sports is cycling. These temporary bicycle racks need to be easily transported and compactly stored when not in use.

It is an object of the present invention to provide such a bicycle rack.

According to the present invention there is provided a bicycle rack comprising: at least two interengageable substantially flat base frames, each base frame including first and second substantially parallel longitudinal members and a spacing member, the members lying on a frame plane and delimiting a storage region, wherein the members of each base frame are permanently interconnected; and a plurality of like wheel support members, each defining a support member plane, and having first and second engagement means which are respectively engagable with support means of the first and second longitudinal members such that its support member plane is substantially perpendicular to the base frame plane, wherein the storage region of each base frame is dimensioned to receive plural wheel support members with the support member planes substantially parallel to the base frame plane when the bicycle rack is disassembled.

By each base frame having a storage region dimensioned to receive a plurality of the wheel support members, this enables bicycle rack to be stored compactly when disassembled enabling it to be easily transported.

Each wheel support member engagement means may comprise a free end and each support means or each base frame support means or each support means comprising part of a said longitudinal member comprises an aperture which is engageable by one said support member free end. Each aperture or each base frame aperture or each aperture of a said longitudinal member may be lined with a plastic sleeve. The sleeve provides a press fit with the support member free end to enable the wheel support member to be firmly held.

The support means of each base frame may be configured to permit a pair of wheel support members to be selectively connected to the base frame in a first configuration with a first distance between the wheel support members and at least one other configuration with a different distance between the wheel support members for supporting wheels of different thicknesses.

Each wheel support member may comprise a substantially U-shaped elongate member.

The bicycle rack may include securing members for connecting the base frames to a surface on which the base frames are situated.

Each base frame may include a connection means for releasably coupling it to at least one other base frame. The connection means may comprise a resiliently biased member which is displaceable to permit two coupled base frames to be released from each other.

At least one of the base frames may include a locking device for locking a bicycle to the bicycle rack.

The bicycle rack may include a cover attachable to the bicycle rack and configured to cover a bicycle supported by the bicycle rack. The cover may be attached to the bicycle rack by means of one of the wheel support members passing through an aperture in the cover.

A carry case may be provided which is adapted to accommodate the bicycle rack when the bicycle rack is disassembled. The carry case enables the disassembled bicycle rack to be easily transported by a person.

An embodiment of the present invention will now be described, by way of example, with reference to the accompanying schematic drawings, in which:
Figure 1 is a perspective view of an assembled bicycle rack in accordance with an embodiment of the present invention;
Figure 2 is a perspective view of the bicycle rack showing first and second base frames of the bicycle rack separated from each other;
Figure 3 is a partially exploded view of the bicycle rack;
Figure 4 is a detail showing how the first and second base frames can be connected;
Figure 5 to 7 are perspective, plan and end views of the first base frame including wheel support members and a looped locking device;
Figure 8 is perspective view of a cover covering a bicycle docked to the bicycle rack;
Figure 9 is a detail of Figure 8 showing a portion of the cover; and
Figure 10 is a view of an open carry case containing a disassembled bicycle rack.

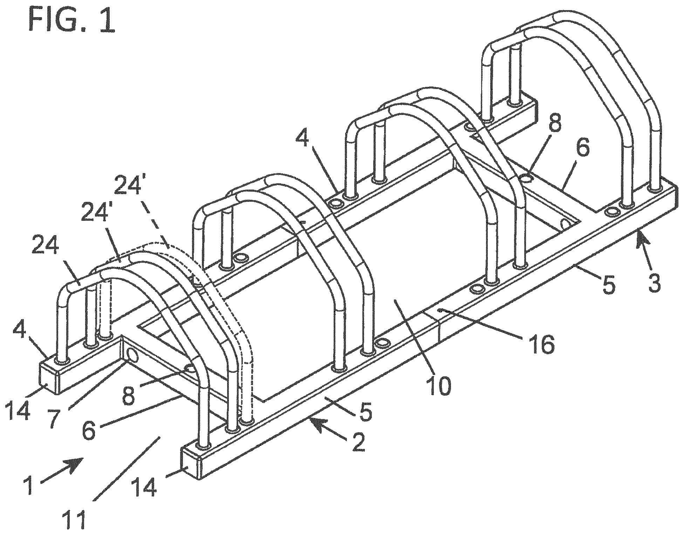

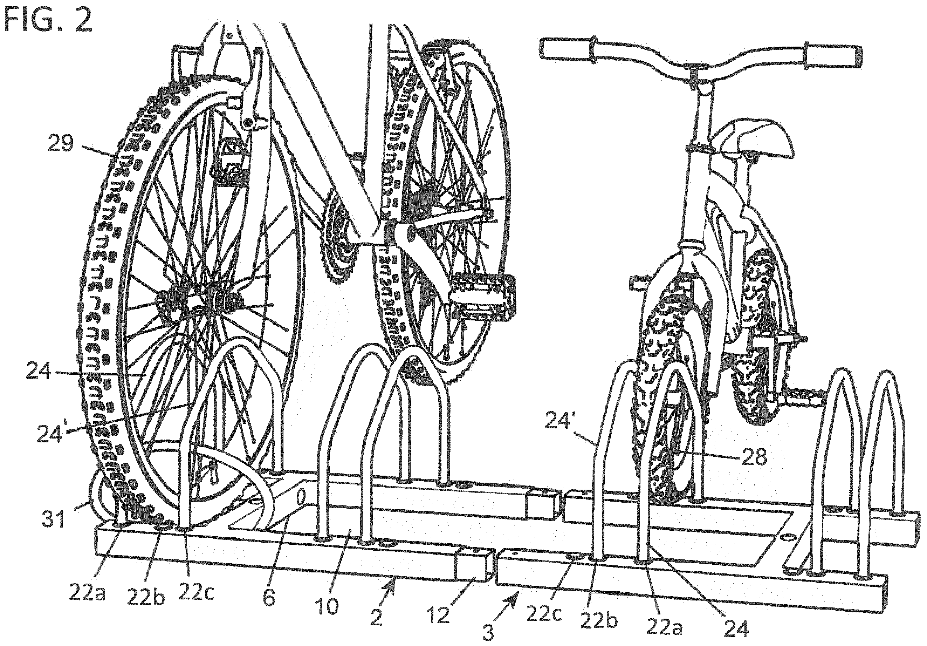

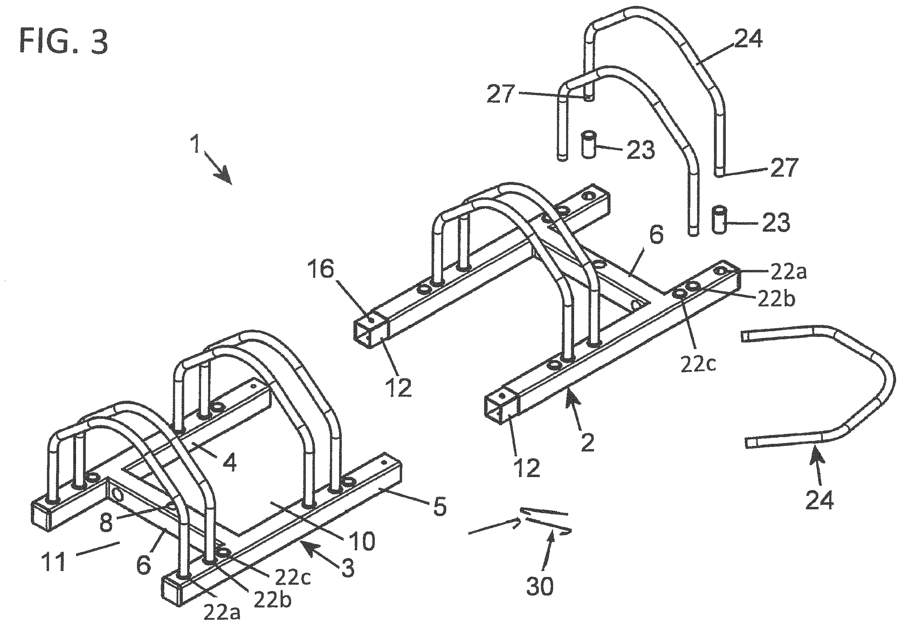

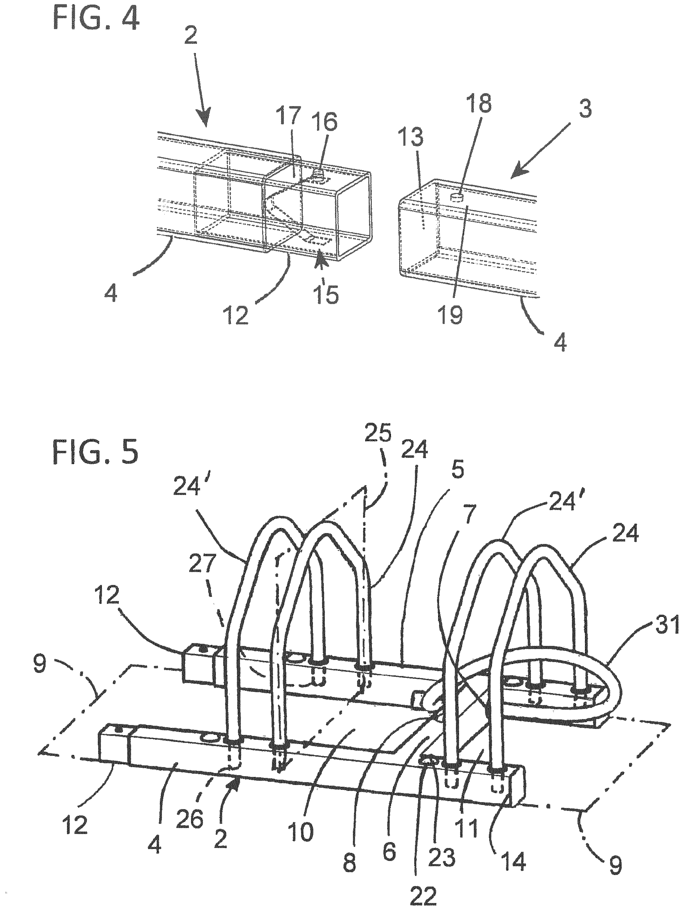

Referring to Figure 1 of the accompanying drawings, a bicycle rack 1 according to an embodiment of the invention is shown in an assembled configuration. Referring also to Figures 2 to 7, the bicycle rack 1 comprises first and second substantially flat base frames 2, 3 which are interengageable. Each base frame 2, 3 includes first and second substantially parallel hollow longitudinal members 4, 5 and a spacing member or cross brace 6 wherein the base frame 2, 3 is H-shaped. The spacing member 6 has a pair of first through holes 7 parallel to the longitudinal members 4, 5 and a second through hole 8 perpendicular to the longitudinal members 4, 5. The members 4, 5, 6 of each base frame 2, 3 are permanently interconnected, such as by welding, and lie on a frame plane 9 (see Figure 5), delimiting a first storage region 10 on one side of the spacing member 6 and a second storage region 11 on the other side of the spacing member 6. The members 4, 5, 6 of each base frame 2, 3 may comprise extruded aluminium.

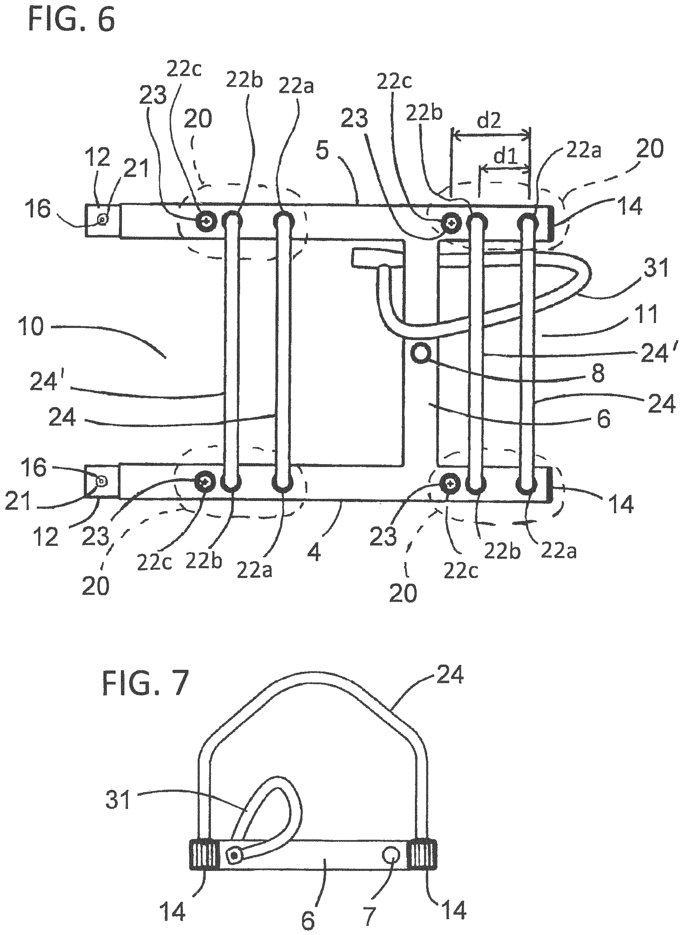

The first base frame 2 has a plug 12 extending from one end of each longitudinal member 4, 5 which is arranged to be snuggly received in an opening 13 of the corresponding longitudinal member 4, 5 of the second base frame 3. The other ends of the longitudinal members 4, 5 are covered by a plastic cap 14. Inside each plug 12 is a resiliently biased spring clip 15 (see Figure 4) and one end of the spring clip 15 has a protrusion 16 which extends through an aperture 21 (see Figure 6) in a top surface 17 of the plug 12. The protrusion 16 extends through an aperture 18 in a top surface 19 of the longitudinal member 4, 5 of the second base frame 3 when the plugs 12 of the first base frame 2 are fully inserted into the corresponding openings 13 of the second base frame 3 so that the first and second base frames 2, 3 are interengaged.

Each longitudinal member 4, 5 of each base frame 2, 3 has two groups 20 (see Figure 6) of apertures 22 spaced along it. Each group 20 comprises three apertures 22a, 22b, 22c spaced along the longitudinal member 4, 5 wherein there is a first distance d₁ between a first aperture 22a and a second aperture 22b of each group 20 and a different distance d₂ between the first aperture 22a and a third aperture 22c of the group 20. The groups 20 of apertures 22 of one longitudinal member 4 are aligned with the groups 20 of apertures 22 of the other longitudinal member 5 of the base frame 2, 3 to form pairs of groups 20 of apertures 22. Each aperture 22 is lined with a sleeve 23 of plastic such as nylon.

A plurality of like wheel support members 24 are provided which each defines a support member plane 25 (see Figure 5). Each wheel support member is in the form of a substantially U-shaped elongate member or stanchion 24. Each support member 24 has a pair of free ends 26, 27 forming first and second engagement means. There is a pair of support members 24, 24' for each pair of groups 20 of apertures 22. Each support member free end 26, 27 can be inserted into the sleeve 23 in one of apertures 22 of one of the groups 20 in a press fit manner. The pairs of support members 24, 24' are thus supported by the longitudinal members 4, 5 with the support member planes 25 perpendicular to the base frame plane 9.

The free ends 26, 27 of each pair of U-shaped support members 24, 24' can be selectively inserted into two of the three pairs of apertures 22 of a base frame group 20. Thus, if the free ends 26, 27 of the pair of support members 24, 24' are inserted into the first and second apertures 22a, 22b of the aligned groups 20 there is a first distance d₁ between the support members 24, 24' to support a bicycle wheel 28 (see Figure 2) of one thickness of a bicycle docked in the bicycle rack 1. If the free ends 26, 27 are inserted into the first and third apertures 22a, 22c of the aligned groups 20 there is a second larger distance d₂ between the support members 24, 24' to support a bicycle wheel 29 of a larger thickness.

The bicycle rack 1 includes securing members 30 for connecting the base frames 2, 3 to a surface on which the base frames 2, 3 are situated. The securing members may be in the form of ground pegs 30 wherein the ground pegs 30 are fixed through the spacing member second through hole 8 of each base frame spacing member 6 to anchor the base frames 2, 3 to the ground beneath.

The first base frame 2 includes a looped locking device 31 for locking a bicycle docked to the bicycle rack 1 wherein the locking device 31 extends through one of the pair of first through holes 7 in the base frame spacing member 6 and can extend through the wheel 29 of a bicycle between a pair of the support members 24, 24' which are near the spacing member 6. The second base frame 3 may also include such a looped locking device 31.

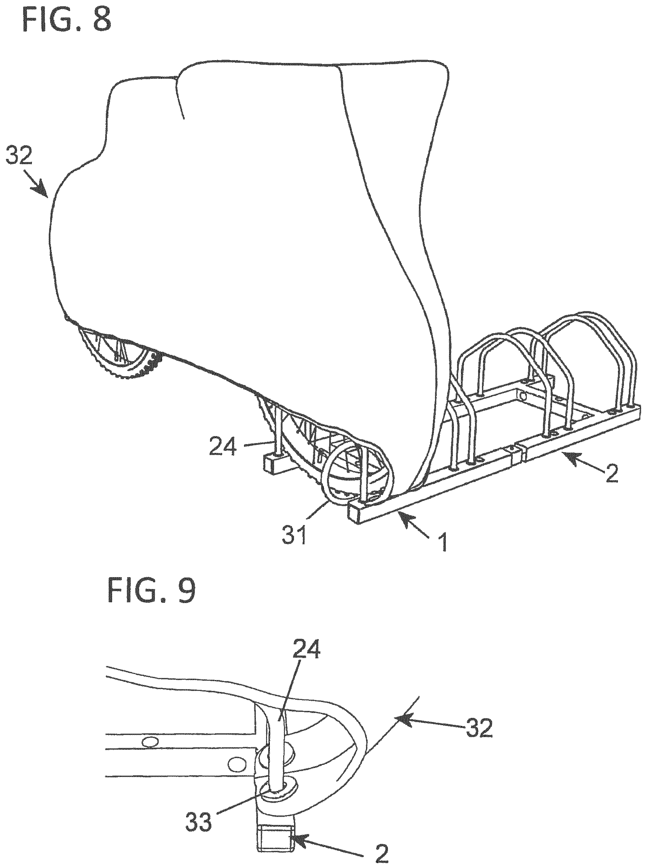

Referring to Figures 8 and 9, the bicycle rack 1 includes a waterproof cover 32 attachable to the bicycle rack 1 and configured to cover a bicycle supported by the bicycle rack 1. The cover 32 has an aperture 33 through which one of the support members 24 passes so as to attach the cover 32 to the bicycle rack 1.

The bicycle rack 1 may include a tamper alarm.

Where the bicycle rack 1 is used for a triathlon, slot numbers may be attached to the bicycle rack 1.

To disassemble the bicycle rack 1, any bicycle locking devices 31 are removed. The U-shaped support members 24, 24' are pulled out of the first and second base frames 2, 3 and any bicycle covers 32 removed. The ground pegs 30 are also removed. The spring clip protrusions 16 are pushed into the longitudinal members 4, 5 of the second base frame 3 in order to uncouple and release the first base frame 2 from the second base frame 3.

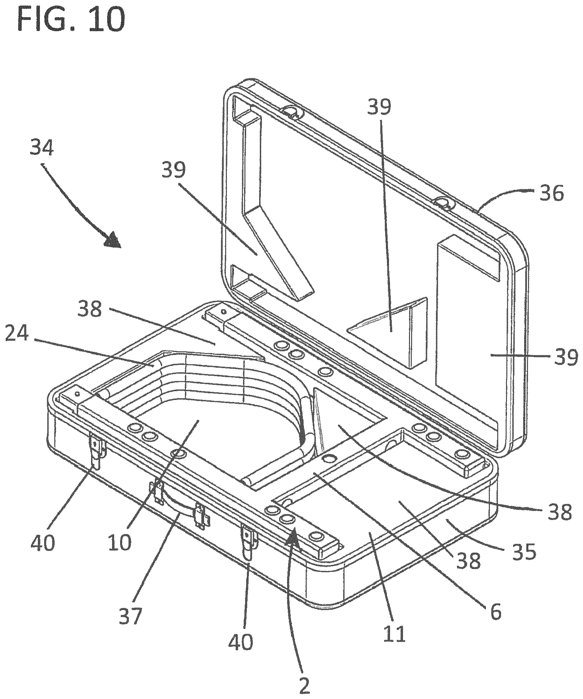

Referring to Figure 10, a carry or transport case 34 for the bicycle rack 1 has a hollow case base 35 and a lid 36. The base 35 has a carry handle 37. The carry case 34 also has fasteners 40 to enable the case 34 to be fastened shut when closed. The carry case 34 is opened and the first and second base frames 2, 3 are stacked in the case base 35 with the spacing members 6 and the first and second storage regions 10, 11 of the base frames 2, 3 aligned (only the first base frame 2 is shown which is on top of the second base frame 3). The U-shaped support members 24 are stacked in the aligned first storage regions 10 which are dimensioned to receive the support members 24 with their support member planes 25 substantially parallel to the base frame planes 9. The aligned first storage regions 10 can be used to store the bicycle covers 32, locking devices 31 and ground pegs 30. The lid 36 is then closed on the case base 35. Blocks 38 in the inside of the case base 35 are provided to hold the base frames 2, 3 and the support members 24 in place and there are corresponding blocks 39 on the inside of the lid 36. The fasteners 40 on the closed carry case 34 are fastened shut and the fastened carry case 34 containing the disassembled bicycle rack 1 can then be easily transported. The carry case 34 may also contain a bicycle maintenance toolkit (not shown). The carry case 34 may also contain any tamper alarm and/or slot numbering system for the bicycle rack 1.

In a specific example of a preferred embodiment, the first base frame 2 may have length of about 500 mm and a width of about 340 mm. The second base frame 3 would have the same width and be of a similar length. The height of an assembled bicycle rack 1 may be about 280 mm from the top of the U-shaped support members 24 to the bottom of the base frames 2, 3.

Whilst a particular embodiment has been described, it will be understood that various modifications may be made without departing from the scope of the claimed invention.

Although two base frames are shown, the bicycle frame may contain more than two base frames connected in series. The base frame may be U-shaped.

The waterproof cover may be configured to cover a plurality of bicycles supported by the bicycle rack.

## Claims

1. A bicycle rack (1) comprising:
at least two interengageable substantially flat base frames (2, 3), each base frame (2, 3) including first and second substantially parallel longitudinal members (4, 5) and a spacing member (6), the members lying on a frame plane (9) and delimiting a storage region (10), wherein the members (4, 5, 6) of each base frame (2, 3) are permanently interconnected; and
a plurality of like wheel support members (24, 24'), each defining a support member plane (25), and having first and second engagement means (26, 27) which are respectively engagable with support means (22, 23) of the first and second longitudinal members (4, 5) such that its support member plane (25) is substantially perpendicular to the base frame plane (9),
wherein the storage region (10) of each base frame (2, 3) is dimensioned to receive plural wheel support members (24, 24') with the support member planes (25) substantially parallel to the base frame plane (9) when the bicycle rack (1) is disassembled.

2. The bicycle rack as claimed in claim 1, wherein each wheel support member engagement means comprises a free end (26, 27) and each base frame support means (22, 23) comprises an aperture (22) which is engageable by one said support member free end (26, 27).

3. The bicycle rack as claimed in claim 2, wherein each base frame aperture (22) is lined with a plastic sleeve (23).

4. The bicycle rack as claimed in any preceding claim, wherein the support means (22, 23) of each base frame (2, 3) is configured to permit a pair of wheel support members (24, 24') to be selectively connected to the base frame (2, 3) in a first configuration with a first distance (d₁) between the wheel support members (24, 24') and at least one other configuration with a different distance (d₂) between the wheel support members (24, 24') for supporting wheels of different thicknesses.

5. The bicycle rack as claimed in any preceding claim, wherein each wheel support member (24, 24') comprises a substantially U-shaped elongate member.

6. The bicycle rack as claimed in any preceding claim, further comprising securing members (30) for connecting the base frames (2, 3) to a surface on which the base frames (2, 3) are situated.

7. The bicycle rack as claimed in any preceding claim, wherein each base frame (2) includes a connection means (15) for releasably coupling it to at least one other base frame (3).

8. The bicycle rack as claimed in claim 7, wherein the connection means comprises a resiliently biased member (15) which is displaceable to permit two coupled base frames (2, 3) to be released from each other.

9. The bicycle rack as claimed in any preceding claim, wherein at least one of the base frames (2, 3) includes a locking device (31) for locking a bicycle to the bicycle rack (1).

10. The bicycle rack as claimed in any preceding claim, including a cover (32) attachable to the bicycle rack (1) and configured to cover a bicycle supported by the bicycle rack (1).

11. The bicycle rack as claimed in claim 10, wherein the cover (32) is attached to the bicycle rack (1) by means of one of the wheel support members (24, 24') passing through an aperture (33) in the cover (32).

12. The bicycle rack as claimed in any preceding claim, in combination with a carry case (34) adapted to accommodate the bicycle rack (1).
